# EUROPÄISCHE PATENTSCHRIFT

(11) **EP 1 187 526 B1**
(45) Veröffentlichungstag und Bekanntmachung des Hinweises auf die Patenterteilung: **03.09.2003**
(21) Anmeldenummer: 00938295.3
(22) Anmeldetag: 07.06.2000
(51) Int. Cl.: A01F 12/40

(54) **STROHHÄCKSLER FÜR EINEN MÄHDRESCHER**
STRAW CUTTER FOR A COMBINE HARVESTER
HACHEUSE DE PAILLE POUR MOISSONNEUSE-BATTEUSE

(30) Priorität: 16.06.1999 AT 105799
(43) Veröffentlichungstag der Anmeldung: 20.03.2002
(73) Patentinhaber: Schrattenecker, Franz, A-4773 Eggerding (AT)
(72) Erfinder: Schrattenecker, Franz, A-4773 Eggerding (AT)
(74) Vertreter: Hübscher, Helmut, Dipl.-Ing.
(86) Internationale Anmeldenummer: AT0000160
(87) Internationale Veröffentlichungsnummer: WO00078126

(56) Entgegenhaltungen:
- EP-A- 0 631 717
- EP-A- 0 685 151
- DE-A- 19 535 175

## Beschreibung

Die Erfindung bezieht sich auf einen Strohhäcksler für einen Mähdrescher, bestehend aus einer in einem Häckslergehäuse gelagerten Häckslertrommel und einem an das Häckslergehäuse angeschlossenen, eine Leitwand mit einer Leiteinrichtung zum Austragen des gehäckselten Strohs über die Arbeitsbreite des Mähdreschers bildenden Verteilerkasten, der beidseits über eine Blaseinrichtung mit zusätzlicher Förderluft beaufschlagbar ist.

Das bei einem Mähdrescher nach dem Dreschvorgang anfallende Stroh wird vorzugsweise gehäckselt und über die Arbeitsbreite des Mähdreschers verteilt wieder auf den Boden abgelegt, um das gehäckselte Stroh in den Ackerboden einarbeiten zu können. Zu diesem Zweck werden Strohhäcksler an die Mähdrescher angeschlossen, die das gehäckselte Stroh über einen Verteilerkasten austragen, der eine Leitwand mit einer durch Leitschaufeln gebildeten Leiteinrichtung für das durch die Häckslertrommel gegen die Leitwand abgeschleuderte Stroh bildet. Der mit Hilfe der rotierenden Häckslertrommel erzeugte Förderluftstrom reicht jedoch im Zusammenwirken mit den auf das gehäckselte Stroh einwirkenden Fliehkräften im allgemeinen nicht für eine ausreichend gleichmäßige Strohverteilung über die Arbeitsbreite des Mähdreschers aus. Aus diesem Grunde wurde bereits vorgeschlagen (DE 195 35 175 A1), an die Stirnseiten der Häckslertrommel Lüfterräder anzuordnen, die Außenluft ansaugen und in den Verteilerkasten blasen, um den Förderluftstrom zu vergrößern und die Verteilung des gehäckselten Strohs über die Auftragsbreite zu verbessem. Trotz dieser Maßnahme konnte die durch die Leiteinrichtung bestimmte Auswurfverteilung des gehäckselten Strohs nicht entscheidend verbessert werden, insbesondere dann nicht, wenn die Auswurfbreite gegenüber der Länge der Häckslertrommel vergrößert werden soll oder mit einen gleichmäßigen Auswurf behindernden Windverhältnissen zu rechnen ist.

Schließlich ist es bekannt (EP 0631717 A1), an den Strohhäcksler eines Mähdreschers Wurfgebläse anzuschließen, mit deren Hilfe das gehäckselte Stroh über eine vorbestimmte Breite ausgeworfen werden kann. Zum Ausgleich von Seitenwindeinflüssen oder von Hangneigungen können die Wurfgebläse oder deren Auswurfstutzen der Seite nach verschwenkbar ausgeführt sein. Das Vorsehen von Wurfgebläsen ist jedoch konstruktiv aufwendig, wozu noch eine durch das auszuwerfende Stroh bedingte Verschleißanfälligkeit kommt.

Der Erfindung liegt somit die Aufgabe zugrunde, einen Strohhäcksler für einen Mähdrescher der eingangs geschilderten Art so auszugestalten, daß eine an die jeweiligen Verhältnisse anpaßbare, gleichmäßige Ablage des gehäckselten Strohs über die Arbeitsbreite des Mähdreschers sichergestellt werden kann.

Die Erfindung löst die gestellte Aufgabe dadurch, daß die Blaseinrichtung wenigstens zwei je einer Verteilerkastenseite zugeordnete Luftdüsen aufweist, die jeweils zumindest um eine quer zur Blasrichtung und quer zur Leitwand verlaufende Achse schwenkverstellbar gelagert sind.

Durch das Vorsehen von wenigstens zwei je einer Verteilerkastenseite zugeordneten Luftdüsen werden im Seitenbereich des Verteilerkastens gerichtete Förderluftströme für das gehäckselte Stroh zur Verfügung gestellt, so daß die Förderluftströmungen nicht nur über die Leiteinrichtung des Verteilerkastens ausgerichtet werden. Dies bedeutet, daß gerade im seitlichen Verteilerbereich die Auswurfbedingungen über den gerichteten Blasluftstrom der Luftdüsen maßgebend beeinflußt werden kann, was sich unmittelbar in einer gleichmäßigeren Auswurfverteilung und eine größere Auswurfbreite bemerkbar macht. Die Verstellung der Luftdüsen jeweils um eine quer zur Blasrichtung und quer zur Leitwand verlaufende Achse erlaubt eine vorteilhafte Anpassung des Strohauswurfes an sich verändernde Verhältnisse, so daß auch bei unterschiedlichen Betriebsbedingungen ein gleichmäßiger Austrag des gehäckselten Strohs sichergestellt werden kann.

Eine besonders vorteilhafte Einflußnahme auf die Auswurfbedingungen ergeben sich, wenn die Luftdüsen jeweils zusätzlich um eine quer zur Blasrichtung, aber parallel zur Leitwand verlaufende Achse schwenkverstellbar gelagert werden, so daß nicht nur die Auswurfrichtung, sondern auch die Auswurfweite über den gerichteten Förderluftstrom aus den Luftdüsen entsprechend eingestellt werden können.

Die Versorgung der Luftdüsen mit einer ausreichenden Luftmenge kann über zwei beidseits des Häckslergehäuses angeordnete Axialgebläse erfolgen, an die die Luftdüsen angeschlossen werden. Die außerhalb des Häckslergehäuses vorgesehenen Axialgebläse erlauben auch eine Nachrüstung bestehender Strohhäcksler, insbesondere dann, wenn diese Axialgebläse nicht über die Häckslerwelle angetrieben werden. Die Luftversorgung der Luftdüsen braucht jedoch nicht über zwei beidseits des Häckslergehäuses vorgesehene Axialgebläse zu erfolgen. Es kann auch ein den Luftdüsen gemeinsames Axialgebläse vorgesehen sein, wenn dieses Gebläse eine ausreichende Förderleistung mit sich bringt. In diesem Fall sind die Luftdüsen über entsprechende Rohrleitungen an das Gebläse anzuschließen.

Da im allgemeinen mit einer Verstellung der Leiteinrichtung des Verteilerkastens auch die Luftdüsen zu verstellen sind, empfiehlt es sich, die Luftdüsen über die für die Leiteinrichtung vorgesehene Verstelleinrichtung zumindest um die quer zur Leitwand verlaufenden Achsen in ihrer Schwenklage zu verstellen, um eine gesonderte Anpassung der Luftdüsen zu vermeiden. Diese Zwangsverstellung der Luftdüsen mit der Leiteinrichtung soll aber die von der Leiteinrichtung unabhängige Einstellung der Luftdüsen nicht beeinträchtigen. Aus diesem Grunde können die Luftdüsen in ihrer Schwenklage gegenüber der Verstelleinrichtung einstellbar ausgebildet werden.

In der Zeichnung ist der Erfindungsgegenstand beispielsweise dargestellt. Es zeigen
- Fig. 1: einen erfindungsgemäßen Strohhäcksler für einen Mähdrescher in einem vereinfachten Vertikalschnitt durch ein seitlich an das Häckslergehäuse angeschlossenes Axialgebläse,
- Fig. 2: diesen Strohhäcksler in einem schematischen Schnitt durch den Verteilerkasten entlang der Linie II-II der Fig. 1,
- Fig. 3: eine der Fig. 1 entsprechende Darstellung einer Konstruktionsvariante eines erfindungsgemäßen Strohhäckslers und
- Fig. 4: den Strohhäcksler gemäß der Fig. 3 in einer Ansicht von unten in einem kleineren Maßstab.

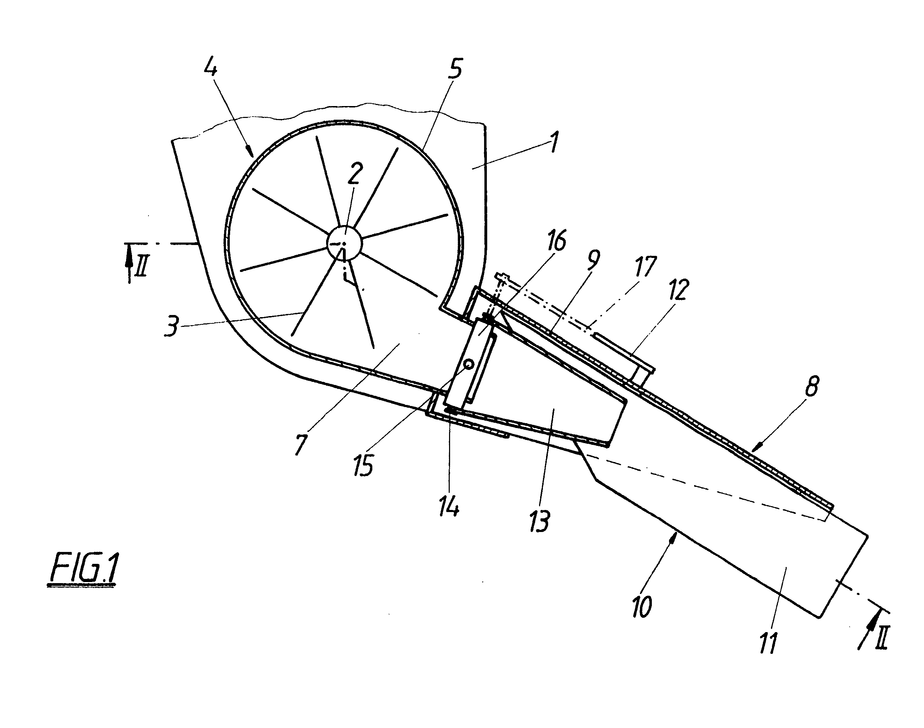

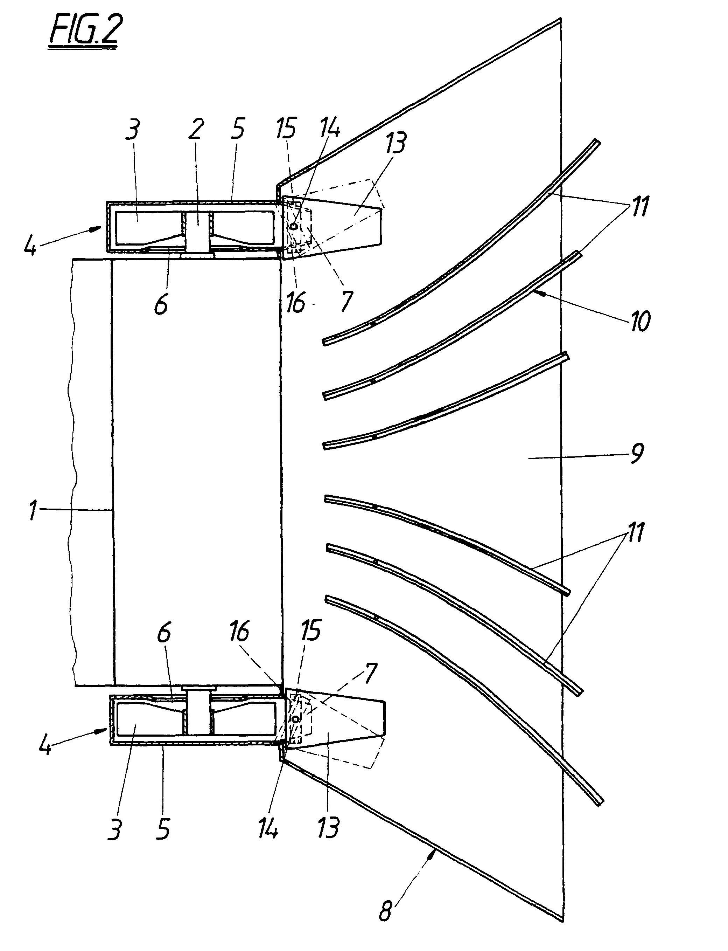

Gemäß dem Ausführungsbeispiel nach den Fig. 1 und 2 ist die in einem Häckslergehäuse 1 gelagerte, die Häckslertrommel mit den Schneidwerkzeugen tragende Häckslerwelle 2 beidseits über das Häckslergehäuse verlängert und nimmt auf beiden Seiten des Häckslergehäuses 1 ein Flügelrad 3 eines Axialgebläses 4 auf, dessen Gehäuse 5 auf der dem Häckslergehäuse 1 zugekehrten Seite eine axiale Luftansaugöffnung 6 aufweist und einen tangentialen Luftaustrittsstutzen 7 bildet, der in einen an die Auswurföffnung des Häckslergehäuses 1 anschließenden Verteilerkasten 8 mündet, wie dies insbesondere der Fig. 2 entnommen werden kann. Dieser Verteilerkasten 8 bildet für das von der Häckslertrommel abgeschleuderte gehäckselte Stroh eine Leitwand 9, die mit einer Leiteinrichtung 10 aus verstellbaren Leitschaufeln 11 versehen ist. Die Leitschaufeln 11 sind in der Leitwand 8 schwenkverstellbar gehalten und können über ein Gestänge 12 (Fig. 1) entsprechend der gewünschten Auffächerung des von der Häckslertrommel abgeschleuderten Strohs verstellt werden.

Die in den Verteilerkasten 8 ragenden Luftaustrittsstutzen 7 der Axialgebläse 4 sind mit Luftdüsen 13 versehen, die auf den Luftaustrittsstutzen 7 um je eine quer zur Leitwand 8 und quer zur Blasrichtung verlaufende Achse 14 schwenkverstellbar gelagert sind. Zusätzlich können die Luftdüsen 13 um quer zur Blasrichtung, aber in Richtung der Leitwand 9 verlaufende Achsen 15 verstellt werden, was durch eine kardanische Lagerung der Luftdüsen 13 gegenüber den Luftaustrittsstutzen 7 mit Hilfe eines Gelenkbügels 16 erreicht wird. Durch die damit ermöglichte, räumliche Verstellung der Luftdüsen 13 kann der über die Axialgebläse 4 erzeugte Förderluftstrom gezielt gegenüber dem von der Häckslertrommel abgeschleuderten Stroh ausgerichtet werden, das über die Leiteinrichtung 10 fächerförmig abgeworfen wird, so daß über die Blasluft der Luftdüsen 13 im Seitenbereich des Verteilerkastens 8 maßgeblich Einfluß auf die Fächerform des abgeschleuderten Strohs genommen werden kann, um je nach den Abwurfbedingungen eine gewünschte Verteilung des Häckselgutes über die Auswurfbreite sicherzustellen.

Mit den Luftdüsen 13, die gemäß der Fig. 1 über eine strichpunktiert angedeutete Antriebsverbindung 17 gemeinsam mit der Leiteinrichtung 10 verstellt werden können, kann sowohl die Auswurfrichtung als auch die Auswurfweite des gehäckselten Strohs im Seitenbereich des Auswurffächers eingestellt werden, so daß eine weitgehende Anpassung an unterschiedliche Anforderungen möglich wird. Da die Luftdüsen 13 nicht nur symmetrisch zueinander, sondern auch jeweils für sich verstellt werden können, können auch einseitige Windverhältnisse vorteilhaft berücksichtigt werden, um trotz eines Seitenwindes eine gleichmäßige Strohablage über die Arbeitsbreite des Mähdreschers zu erzwingen.

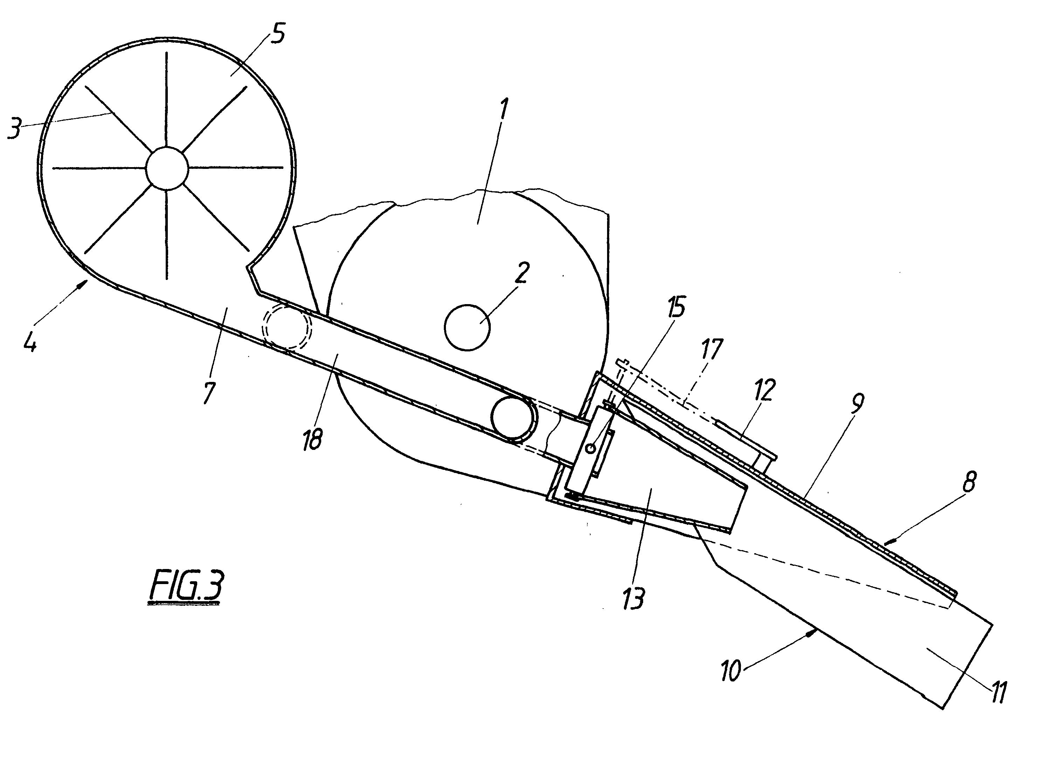

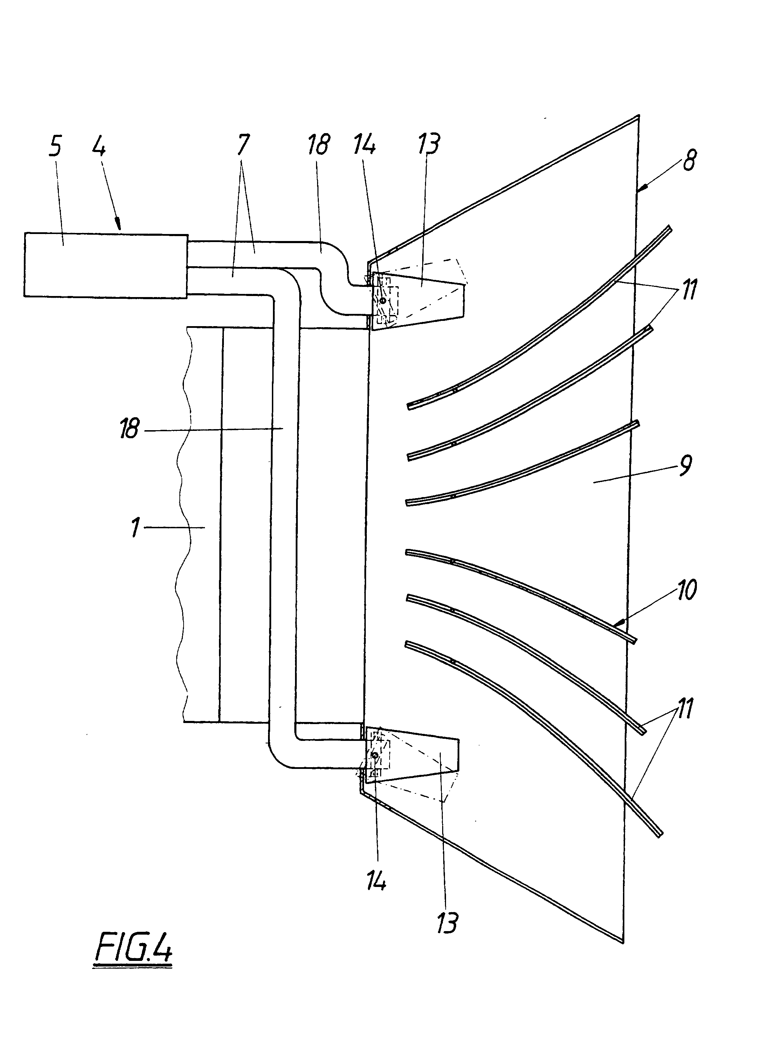

Die Ausführungsform nach den Fig. 3 und 4 unterscheidet sich von der nach den Fig. 1 und 2 im wesentlichen nur durch die Luftversorgung der Luftdüsen 13, weil die Luftdüsen 13 an ein gemeinsames Axialgebläse 4 angeschlossen sind, das unabhängig vom Strohhäcksler angetrieben wird. Dieser vom Häckslerantrieb unabhängige Gebläseantrieb erlaubt eine zusätzliche Einflußnahme auf die zu fördernde Luftmenge, was eine weitere Einflußnahme auf die Förderluftbedingungen im Bereich des Verteilerkastens 8 eröffnet. Die seitlich im Verteilerkasten 8 angeordneten Luftdüsen 13 müssen allerdings über Rohrleitungen 18 an das Axialgebläse 4 angeschlossen werden, wobei sich gesonderte Luftaustrittsstutzen 7 für den Anschluß der Rohrleitungen 18 empfehlen, um eine weitgehend gleichmäßige Luftverteilung auf die Luftdüsen 13 sicherzustellen.

## Patentansprüche

1. Strohhäcksler für einen Mähdrescher, bestehend aus einer in einem Häckslergehäuse (1) gelagerten Häckslertrommel und einem an das Häckslergehäuse (1) angeschlossenen, eine Leitwand (9) mit einer Leiteinrichtung (10) zum Austragen des gehäckselten Strohs über die Arbeitsbreite des Mähdreschers bildenden Verteilerkasten (8), der beidseits über eine Blaseinrichtung mit zusätzlicher Förderluft beaufschlagbar ist, **dadurch gekennzeichnet, daß** die Blaseinrichtung wenigstens zwei je einer Verteilerkastenseite zugeordnete Luftdüsen (13) aufweist, die jeweils zumindest um eine quer zur Blasrichtung und quer zur Leitwand (9) verlaufende Achse (14) schwenkverstellbar gelagert sind.

2. Strohhäcksler nach Anspruch 1, **dadurch gekennzeichnet, daß** die Luftdüsen (13) jeweils zusätzlich um eine quer zur Blasrichtung, aber parallel zur Leitwand (9) verlaufende Achse (15) schwenkverstellbar gelagert sind.

3. Strohhäcksler nach Anspruch 1 oder 2, **dadurch gekennzeichnet, daß** die Luftdüsen (13) an zwei beidseits des Häckslergehäuses (1) angeordnete Axialgebläse (4) angeschlossen sind.

4. Strohhäcksler nach Anspruch 1 oder 2, **dadurch gekennzeichnet, daß** die Luftdüsen (13) an ein gemeinsames Axialgebläse (4) angeschlossen sind.

5. Strohhäcksler nach einem der Ansprüche 1 bis 4, **dadurch gekennzeichnet, daß** die Luftdüsen (13) über eine für die Leiteinrichtung (10) vorgesehene Verstelleinrichtung zumindest um die quer zur Leitwand (9) verlaufenden Achsen (14) schwenkverstellbar sind.

6. Strohhäcksler nach Anspruch 5, **dadurch gekennzeichnet, daß** die Luftdüsen (13) in ihrer Schwenklage gegenüber der Verstelleinrichtung einstellbar sind.

## Claims

1. A straw chopper for a combine harvester, comprising a chopper drum mounted in a casing (1) and a distributor box (8) connected to the casing (1) and forming a deflector wall (9) with a guide device (10) for discharging the chopped straw across the working width of the combine harvester, the box being adapted to be acted upon at either end by additional delivery air via a blower device, **characterised in that** the blower device comprises at least two air nozzles (13) associated with a respective side of the distributor box and each mounted for pivoting at least around an axis (14) extending transversely of the blowing direction and transversely of the deflector wall (9).

2. A straw chopper according to claim 1, **characterised in that** the air nozzles (13) are each mounted for pivoting around an axis (15) extending transversely of the blowing direction but parallel with the deflector wall (9).

3. A straw chopper according to claim 1 or 2, **characterised in that** the air nozzles (13) are connected to two axial blowers (4) disposed one on each side of the chopper casing (1).

4. A straw chopper according to claim 1 or 2, **characterised in that** the air nozzles (13) are connected to a common axial blower (4).

5. A straw chopper according to any of claims 1 to 4, **characterised in that** the air nozzles (13) are pivotable at least around the axes extending transversely of the deflector wall (9) by an adjusting device provided for the guide device (10).

6. A straw chopper according to claim 5, **characterised in that** the air nozzles (13) in their pivoted position are adjustable relative to the adjusting device.

## Revendications

1. Hacheuse de paille pour une moissonneuse-batteuse, formée d'un tambour de hacheuse, montée à rotation dans un carter de hacheuse (1), et d'un caisson distributeur (8), raccordé au carter de hacheuse (1), formant une paroi de guidage (9) avec un dispositif de guidage (10) pour l'expulsion de la paille hachée sur la largeur de travail de la moissonneuse-batteuse, le caisson distributeur (8) étant susceptible d'être sollicité de part et d'autre par de l'air de transport supplémentaire, par l'intermédiaire d'un dispositif de soufflage, **caractérisée en ce que** le dispositif de soufflage présente au moins deux buses à air (13) associées chacune à un côté du caisson distributeur, buses montées de façon à pouvoir être réglées en pivotement chaque fois au moins autour d'un axe (14) s'étendant transversalement par rapport à la direction de soufflage et transversalement par rapport à la paroi de guidage (9).

2. Hacheuse de paille selon la revendication 1, **caractérisée en ce que** les buses à air (13) sont chacune montées de façon à être réglables en pivotement en plus autour d'un axe (15) s'étendant transversalement par rapport à la direction de soufflage mais parallèlement à la paroi de guidage (9) .

3. Hacheuse de paille selon la revendication 1 ou 2, **caractérisée en ce que** les buses à air (13) sont raccordées à deux soufflantes axiales (4) disposées de part et d'autre du carter de hacheuse (1).

4. Hacheuse de paille selon la revendication 1 ou 2, **caractérisée en ce que** les buses à air (13) sont raccordées à une soufflante axiale (4) commune.

5. Hacheuse de paille selon l'une des revendications 1 à 4, **caractérisée en ce que** les buses à air (13) sont réglables par pivotement, au moins autour des axes (14) s'étendant transversalement par rapport à la paroi de guidage (9), par l'intermédiaire d'un dispositif de réglage prévu pour le dispositif de guidage (10).

6. Hacheuse de paille selon la revendication 5, **caractérisé en ce que** les buses à air (13) placées à leur position pivotée sont réglables par rapport au dispositif de réglage.
